# EUROPEAN PATENT SPECIFICATION

(11) **EP 2 454 503 B1**
(45) Date of publication and mention of the grant of the patent: **14.12.2016**
(21) Application number: 10739726.7
(22) Date of filing: 16.07.2010
(51) Int. Cl.: F16H 7/12

(54) **TENSIONER**
SPANNER
TANDEUR

(30) Priority: 21.08.2009 US 583583; 17.07.2009 US 460398
(43) Date of publication of application: 23.05.2012
(73) Proprietor: Gates Corporation, Denver, CO 80202 (US)
(72) Inventor: SERKH, Alexander, Troy MI 48098 (US)
(74) Representative: Tunstall, Christopher Stephen
(86) International application number: PCT/US2010/001999
(87) International publication number: WO 2011/008291

(56) References cited:
- WO-A1-2007/106971
- WO-A2-02/095262
- WO-A2-2007/070276
- US-A1- 2002 010 044

## Description

### Field of the Invention

The invention relates to a tensioner, and more particularly, to a tensioner having a torsion spring having a second end bearing upon the damping member so that upon loading of the torsion spring in the unwinding direction the damping member is compressed between the second end of the torsion spring and the base thereby causing a normal force to be imparted upon the pivot arm by said damping member, according to the preamble of claims 1,5 and as it is disclosed in WO02/095262A.

### Background of the Invention

A mechanical tensioner is used to automatically control the tension of a belt of a front end accessory drive for automotive engine applications. Such a tensioner has a pivot-arm that rotates about a pivot secured to a base and uses a sleeve-type bushing on the pivot to provide a bearing surface for the rotating pivot-arm. A torsion spring is often used with one end connected to the pivot-arm and the other end interconnected through the base to bias the position of the pivot-arm and position an attached pulley against a serpentine belt. The spring is also used to generate a spring force operative with a damping means that generates a normal force component to a friction sliding surface to inhibit or dampen oscillatory movements of the pivot-arm.

Since the serpentine belt must be routed to all accessories, it has generally become longer than its predecessors. To operate properly, the belt is installed with a pre-determined tension. As it operates, it stretches slightly over its length. This results in a decrease in belt tension, which may cause the belt to slip. Consequently, a belt tensioner is used to maintain the proper belt tension as the belt stretches during use.

As a belt tensioner operates, the running belt may excite oscillations in the tensioner spring. These oscillations are undesirable, as they cause premature wear of the belt and tensioner. Therefore, a damping mechanism is added to the tensioner to damp operational oscillations.

Various damping mechanisms have been developed. They include viscous fluid dampers, mechanisms based on frictional surfaces sliding or interaction with each other, and dampers using a series of interacting springs. For the most part these damping mechanisms operate in a single direction by resisting a movement of a belt in one direction. This generally resulted in undamped vibrations existing in a belt during operation as the tensioner arm oscillated between loaded and unloaded positions.

The prior art systems rely on a tensioner set up to be compliant in order to follow the motion of the belt. Usually the tensioner is set up with a low damping rate to facilitate this compliance. As a result the prior art systems operated in an unsatisfactory manner during load changes. The accessory drive operated normally when the engine was running at a steady RPM. The tensioner bearing against the belt would maintain a tension in the span. Generally, the tensioner is "downstream" of the crankshaft in a belt movement direction. Damping was set so that the tensioner would damp most of the vibrations in the running belt.

The problems arise when the engine speed is rapidly changed, in the range of 5000 to 10000 RPM/sec. In this case, the accessories such as the alternator continue to drive the belt after a speed reduction due to rotational inertia. This causes the belt on the "downstream" side of the crankshaft to tighten, loading the tensioner. If the damping rate in the tensioner is too low the tensioner will be unable to resist the increase in belt tension and the arm will move in a direction away from the belt. As a result, the tensioner is not maintaining sufficient tension in the belt. This will allow the belt to slip on the crankshaft pulley, since the belt is now being driven toward the crankshaft, causing squeeking noises. Some prior art systems rely on a means of locking the tensioner arm in the loading direction to prevent the decrease in belt tension. However, locking the tensioner prevents the tensioner from performing its corollary function of damping vibrations in the belt.

Many of the prior art systems depend upon a locking tensioner or upon a particular mechanical arrangement to address the problem of high rate of change of engine speed. Neither system solves the dual problems of preventing squeal during speed changes while continuing to damp belt vibrations. Further, the prior art systems, can be complex and expensive, requiring complex mechanical devices to control the movement of a tensioner arm. The prior art systems are relatively large requiring room on the engine surface.

As a result asymmetric tensioners where developed which vary the damping force depending upon the loading direction of the tensioner. This allowed a high damping rate to be applied in the loading direction while a significantly reduced damping rate was applied in the unloading direction. These tensioners comprised a torsion spring that engage a damping mechanism at two contact points thereby creating a torsional couple which causes the damping mechanism to exert a normal force on the damping mechanism frictional surface. The torsion spring operates to apply the couple to the damping mechanism in the winding direction.

Representative of the art is US patent no. 6,609,988 which discloses an asymmetric damping tensioner system for belt drives on an engine. A belt is connected between a driver pulley on a crankshaft and any number of driven pulleys. Each driven pulley is connected to an accessory such as an alternator, power steering pump, compressor or the like. The tensioner is placed anywhere before the first component of significant effective inertia, in the belt movement direction. A biasing member in the tensioner is used to maintain a tension in the belt. The tensioner further comprises a damping mechanism to damp belt vibrations caused by the operation of the engine. Tensioner damping friction is unequal or asymmetric, depending upon the direction of movement of the tensioner arm. During acceleration the damping friction of the tensioner in the unloading direction is significantly lower than the damping friction in the opposite, or loading direction, as is the case during deceleration. Lower damping friction during acceleration allows the tensioner arm to quickly adjust to the increase in belt length caused by acceleration. Higher damping friction during deceleration prevents the tensioner arm from being moved too far in the loading direction thereby causing slipping and noise. Asymmetric damping also significantly diminishes overall vibration in the belt during all phases of operation.

What is needed is a tensioner having a torsion spring having a second end bearing upon the damping member so that upon loading of the torsion spring in the unwinding direction the damping member is compressed between the second end of the torsion spring and the base thereby causing a normal force to be imparted upon the pivot arm by said damping member. The present invention meets this need.

### Summary of the Invention

The primary embodiment of the invention is to provide a tensioner having a torsion spring having a second end bearing upon the damping member so that upon loading of the torsion spring in the unwinding direction the damping member is compressed between the second end of the torsion spring and the base thereby causing a normal force to be imparted upon the pivot arm by said damping member.

Other embodiments of the invention will be pointed out or made obvious by the following description of the invention and the accompanying drawings. The invention comprises a tensioner comprising the features a of claims 1, 5.

### Brief Description of the Drawings

The accompanying drawings, which are incorporated in and form a part of the specification, illustrate preferred embodiments of the present invention, and together with a description, serve to explain the principles of the invention.
Figure 1 is a cross section view of the tensioner.
Figure 2 is an exploded view of the tensioner.
Figure 3 is a detail perspective of the spring, damping member and base.
Figure 4 is a perspective view of the damping member.
Figure 5 is a perspective view of the damping member.
Figure 6 is a schematic diagram of the forces acting on the damping member.
Figure 7 is an exploded view of an alternate embodiment of the tensioner.
Figure 8 is a detail perspective of the spring, damping member and base.
Figure 9 is a perspective view of the alternate damping member.
Figure 10 is a perspective view of the alternate damping member.
Figure 11 is a schematic diagram of the forces acting on the alternate damping member.
Figure 12 is a cross section view of an alternate embodiment of the tensioner.
Figure 13 is an exploded view of the alternate embodiment shown in Figure 12.

### Detailed Description of the Preferred Embodiment

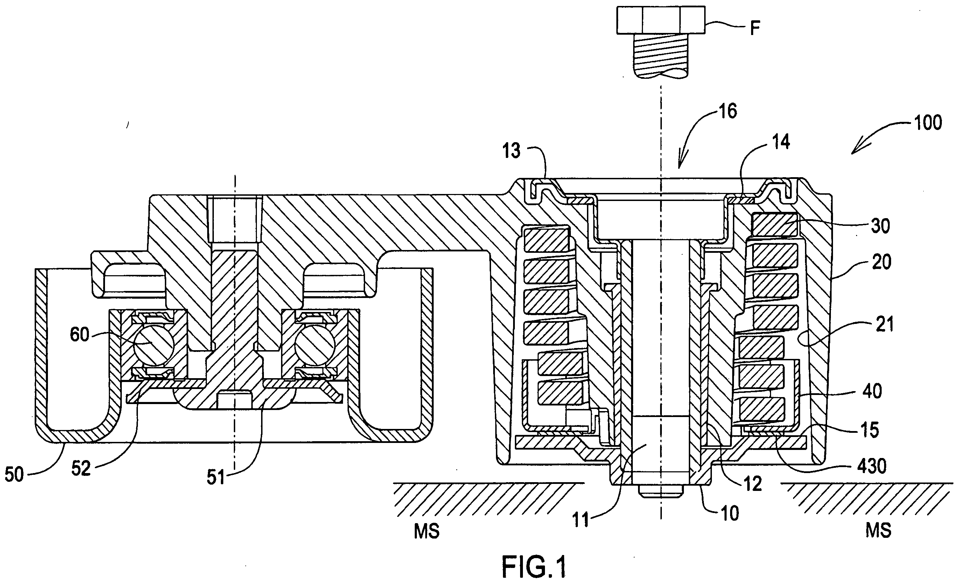

Figure 1 is a cross section view of the tensioner. The tensioner comprises a base 10 to which is connected a shaft 11. Shaft 11 is press fit into base 10. A fastener (F) is inserted through a hole 16 in shaft 10. The fastener mounts the tensioner to a mounting surface (MS), such as an engine.

Pivot arm 20 is pivotally engaged with shaft 11. A bushing 12 is disposed between pivot arm 20 and shaft 11. A cap 13 retains pivot arm 20 on shaft 11. A thrust washer 14 is disposed between cap 13 and pivot arm 20.

Torsion spring 30 is engaged with pivot arm 20 and damping member 40. Torsion spring 30 biases pivot arm 20 to load a belt (not shown). Torsion spring is also compressed between cap 13 and base 10 thereby exerting an axial load on damping member 40. The "axial" direction is parallel to shaft 11.

Pulley 50 is journalled to pivot arm 20 through a bearing 60. Fastener 51 connects bearing 60 to pivot arm 20. Dust cover 52 prevents debris from contaminating bearing 60.

Damping member 40 frictionally engages an inner surface 21 of pivot arm 20 and a surface 15 of base 10.

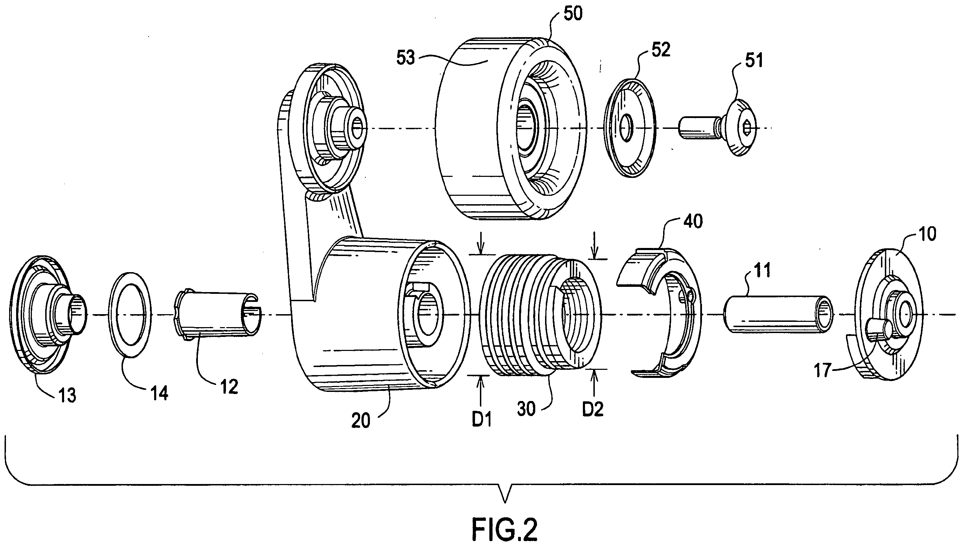

Figure 2 is an exploded view of the tensioner. A belt (not shown) engages pulley surface 53.

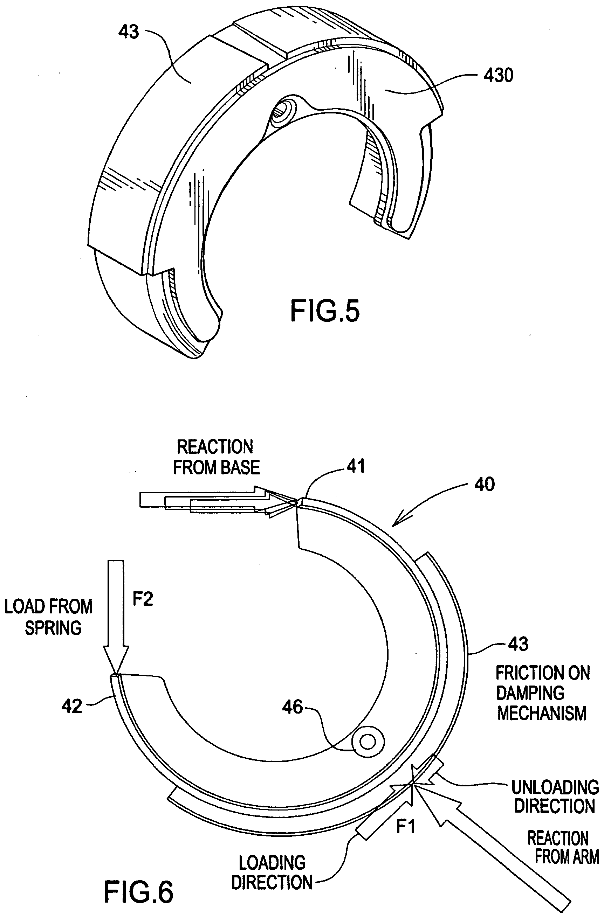

Torsion spring 30 comprises a first diameter D1 and a second diameter D2. D1 is greater than D2 in order to accommodate engaging torsion spring 30 with damping member 40. Diameter D2 is disposed radially inward of arcuate body 45. End 32 engages end 42 on a tangent, see force F2 in Figure 6. "Radially inward" is with reference to shaft 11.

Base 10 comprises a tab 17 which prevents base 10 from rotating during operation of the tensioner.

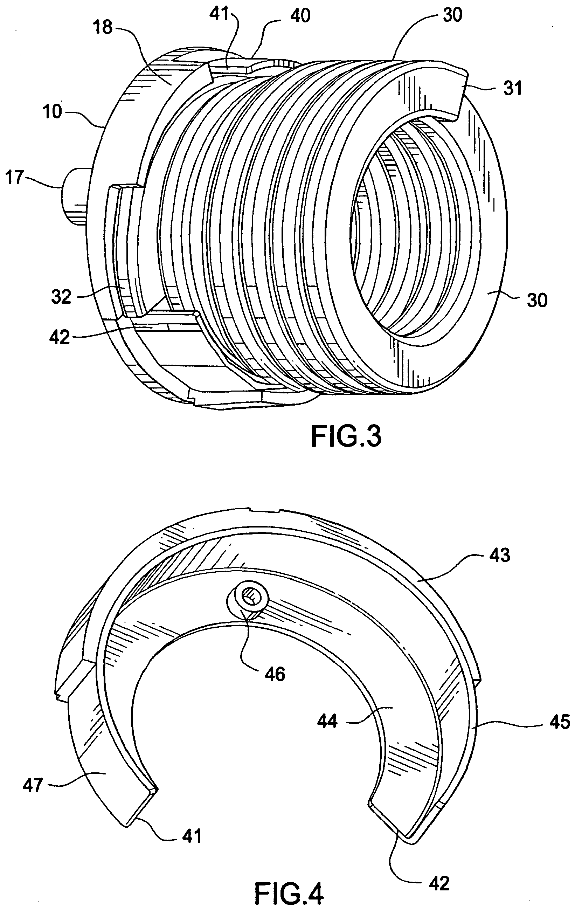

Figure 3 is a detail perspective of the spring, damping member and base. End 41 of damping member 40 engages a tab 18. Tab 18 extends from base 10.

End 32 of torsion spring 30 engages end 42 of damping member 40. A spring force is exerted by end 32 upon end 42 to end 41 to tab 18, which tab 18 exerts a reaction force.

Figure 4 is a perspective view of the damping member. A friction material 43 is applied or fixed to a radially outer surface 47 of damping member body 45. Body 45 is arcuate to fit radially within inner surface 21 of pivot arm 20. Planar member 44 extends radially inward of body 45. Friction surface 43 engages inner surface 21.

A spring volute bears upon spring support member 46, whereby an axial spring force is imparted to planar member 44.

Figure 5 is a perspective view of the damping member. Friction material 430 is applied to or fixed on planar member 44. Friction material 430 engages base surface 15.

Figure 6 is a schematic diagram of the forces acting on the damping member. The diagram shows vectors relating to operation of the tensioner. In operation torsion spring 30 is loaded in the unwinding direction, and it is unloaded in the winding direction.

The reaction from base is transmitted through tab 18. The load from the torsion spring is transmitted from end 32 to end 42.

The loading imparted by the torsion spring causes the damping member 40 to move radially and be pressed against inner surface 21 thereby generating a normal force at the surface of friction material 43 and a reaction force is generated by the pivot arm 20. The normal force multiplied by the coefficient of friction between 43 and 12 generate a frictional damping force, which in turn damps oscillations of the pivot arm 20 during operation.

This damping arrangement, and damping coefficient, is highly asymmetric, meaning the damping force in a loading direction is significantly greater than the damping force in the unloading direction. Friction from damping member 40 will change the magnitude of the force F1 (the fricitonal force from the damping mechanism to the arm) but will not change force F2 (the force from the torsion spring to the pivot arm).

In this embodiment the damping coeffocient asymmetry is approximately 2:1 or 60% damping in the loading direction and 30% damping in the unloading direction. The radial load on bushing 12 during operation will be the equal to the installation radial load, for example, 550N, plus the additional radial load from the damping mechanism (reaction from arm, see Fig. 6). Any increase of the hubload due to friction will be counterbalanced by an increase of force F1 in the opposite direction.

Damping member 40 does not move with respect to base 10 due to the engagement with tab 18.

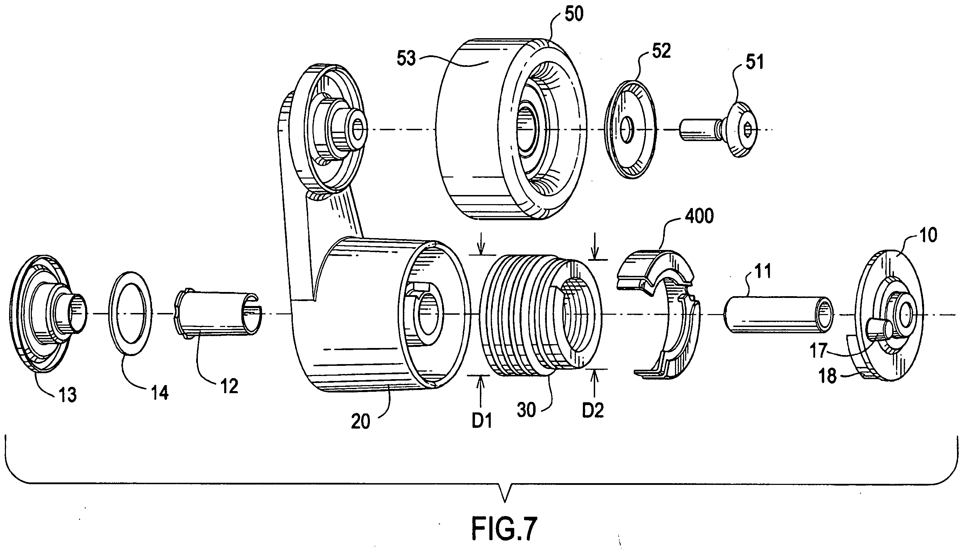

Figure 7 is an exploded view of an alternate embodiment of the tensioner. The components and numbers for the alternate embodiment are the same as describe din Figures 1-6 with the exception of the damping member 400.

In this embodiment damping member 400 comprises two friction material members 430A and 430B.

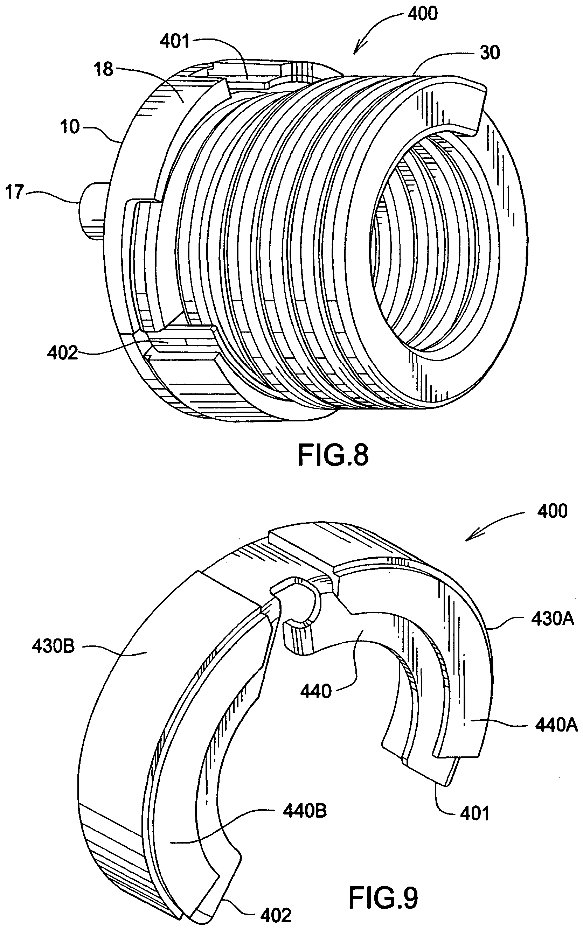

Figure 8 is a detail perspective of the spring, damping member and base. End 401 of damping member 400 engages a tab 18. Tab 18 extends from base 10. Torsion spring 30 has a rectangular cross-section.

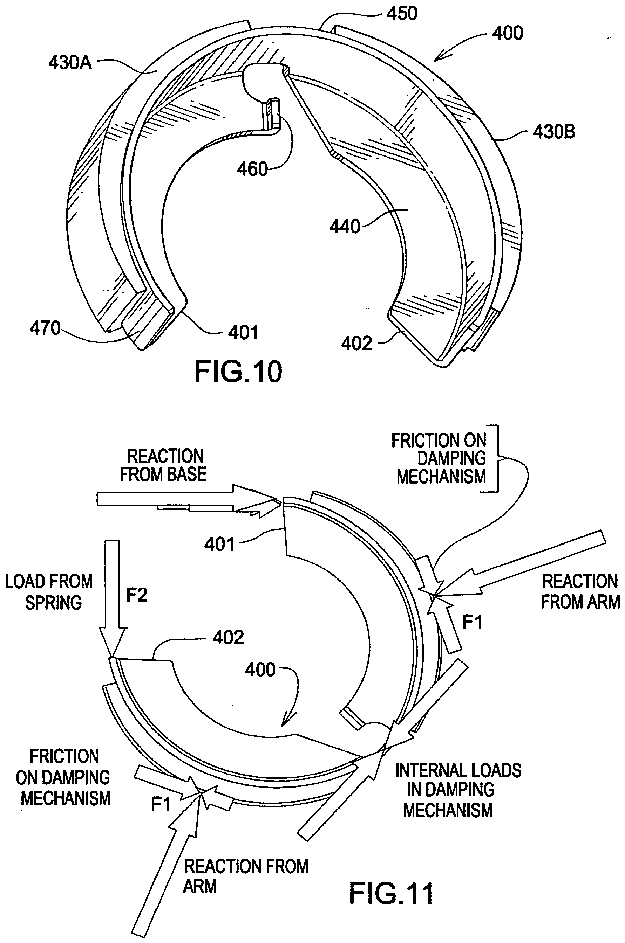

End 32 of torsion spring 30 engages end 402 of damping member 400 on a tangent. Diameter D2 is disposed radially inward of arcuate body 450 so that the end 32 may engage end 402 on a tangent, see force F2 in Figure 11. A spring force is exerted by end 32 upon end 402 to end 401 to tab 18, whereby tab 18 exerts a reaction force.

Figure 9 is a perspective view of the alternate damping member. Friction material members 430A and 430B are applied or fixed to damping member body 450. Body 450 is arcuate to fit radially within inner surface 21 of pivot arm 20. Planar member 440 extends radially inward of body 450. Friction material members 430A and 430B frictionally engage inner surface 21.

A spring volute bears upon spring support member 460, whereby an axial spring force is imparted to planar member 440.

Frictional material members 440A and 440B each engage base surface 15.

Figure 10 is a perspective view of the alternate damping member. A spring volute bears upon tab 460 thereby imparting a load upon damping member 400.

The friction material members 430A and 430B are disposed on a radially outer surface 470 of the body.

Figure 11 is a schematic diagram of the forces acting on the alternate damping member. As noted for Figure 6, the diagram shows vectors relating to operation of the tensioner. In operation torsion spring 30 is loaded in the unwinding direction, and is unloaded in the winding direction.

The reaction from base is transmitted through tab 18. The load from the torsion spring is transmitted from end 32 to end 402.

The loading imparted by the torsion spring causes the damping member 400 to move radially outward thereby generating a normal force at the surface of friction material 430A and 430B and a reaction force is generated by the pivot arm 20. The normal force multiplied by the coefficient of friction between members 430A, 430B and 12 generate a frictional damping force, which in turn damps oscillations of the pivot arm 20 during operation.

This damping arragnement, and damping coefficient, is highly asymmetric, meaing the damping force in a loading direction is significantly greater than the damping force in the unloading direction. Friction from damping member 400 will change the magnitude of the force F1 (the fricitonal force from the damping mechanism to the arm) but will not change force F2 (the force from the torsion spring to the pivot arm).

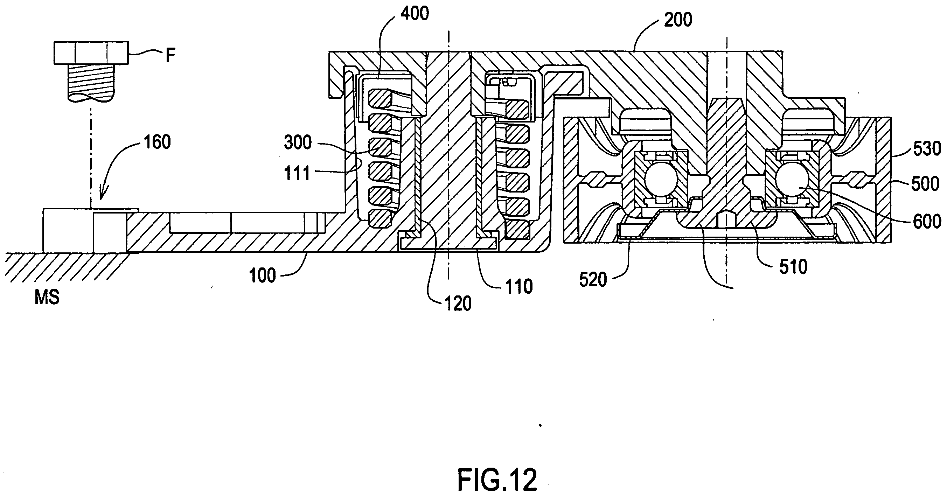

Figure 12 is a cross section view of an alternate embodiment of the tensioner. This alternate embodiment of the tensioner comprises a base 100 to which is pivotally engaged a shaft 110. A bushing 120 is disposed between base 100 and shaft 110.

Shaft 110 is press fit into pivot arm 200. A fastener (F) is inserted through each hole 160 in base 100. The fasteners mount the tensioner to a mounting surface (MS), such as an engine.

Torsion spring 300 is engaged with pivot arm 200 and damping member 400. Torsion spring 300 biases pivot arm 200 to load a belt (not shown). Torsion spring 300 is also compressed between pivot arm 200 and base 100 thereby exerting an axial load on damping member 400. The "axial" direction is parallel to shaft 110.

Pulley 500 is journalled to pivot arm 20 through a bearing 600. Fastener 510 connects bearing 600 to pivot arm 200. Dust cover 520 prevents debris from contaminating bearing 600.

Damping member 400 frictionally engages an inner surface 111 of base 100.

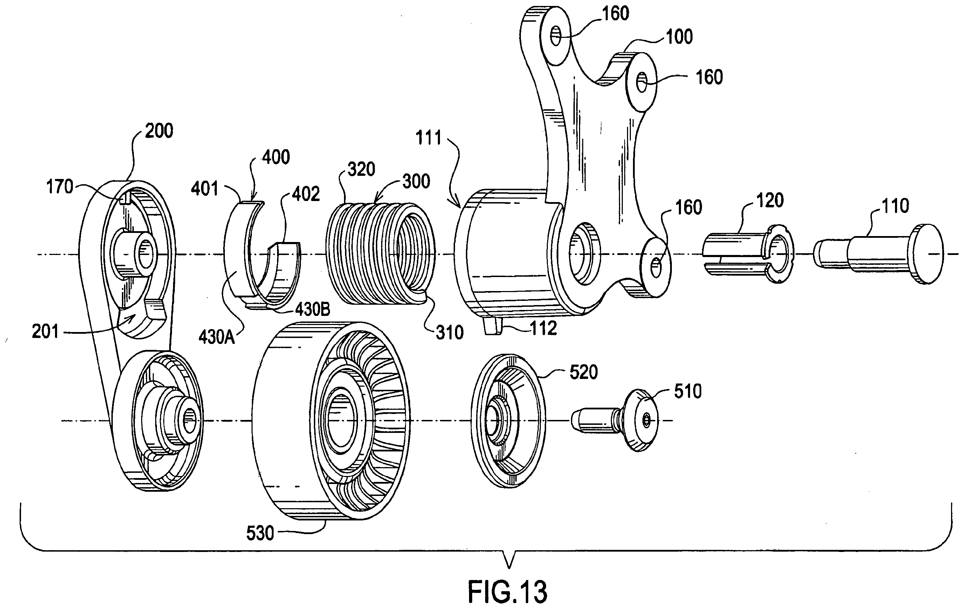

Figure 13 is an exploded view of the alternate embodiment shown in Figure 12. A belt (not shown) engages pulley surface 530.

End 320 of torsion spring 300 engages end 402 on a tangent, see the descriptions for Figures 2, 3, 8, 11 and force F2 in Figure 6. "Radially inward" is with reference to shaft 110. An end 310 of torsion spring 300 engages base 100.

Pivot arm 200 comprises a tab 170 which engages an end 401 of damping member 400. In operation torsion spring 300 is loaded by the pivot arm in the unwinding direction, and is unloaded in the winding direction. In this embodiment damping member 400 comprises two friction material members 430A and 430B as described in Figures 9, 10 and 11. However, in yet another alternate embodiment, damping member 400 can be replaced with damping member 40 as described in Figures 4, 5, 6.

The loading imparted by the pivot arm on the torsion spring causes the damping member 400 to be compressed and to move radially outward thereby generating a normal force at the surface of friction material 430A and 430B and a reaction force is generated by the base 100. The normal force multiplied by the coefficient of friction between members 430A, 430B and surface 111 generate a frictional damping force, which in turn damps oscillations of the pivot arm 20 during operation.

A tab 112 on base 100 engages a slot 210 in pivot arm 200. Engagement of tab 112 with each end of slot 201 limits pivotal movement of the pivot arm 200 during operation of the tensioner.

In the case of all embodiments, the arrangement of the torsion spring and damping member, and the manner in which the end 32 of the torsion spring engages the damping member on a tangent results in force F1 and F2 being in a tangential direction with respect to the damping member as well.

## Claims

1. A tensioner comprising:
a base (10) having a shaft (11) ;
a pivot arm (20) engaged with the shaft;
a pulley (50) journalled to the pivot arm;
an arcuate damping member (40) frictionally engaged with a pivot arm inner surface (21) ;
a torsion spring (30) having a first end (31) engaged with the pivot arm; and **characterized in that**
the torsion spring having a second end (32) bearing upon the damping member so that upon loading of the torsion spring in the unwinding direction the damping member is compressed between the second end of the torsion spring and the base thereby causing a normal force to be imparted upon the pivot arm by said damping member.

2. The tensioner as in claim 1, wherein the base comprises a tab to prevent a base rotation on a mounting surface.

3. The tensioner as in claim 1, wherein the damping member comprises an arcuate body and a friction material disposed on a radially outer surface of the body.

4. The tensioner as in claim 1, wherein the shaft comprises a hole for receiving a fastener.

5. A tensioner comprising:
a base (100) having a shaft (110) pivotally engaged thereto;
a pivot arm (200) connected to the shaft;
a pulley (500) journalled to the pivot arm;
an arcuate damping member (400) frictionally engaged with a base inner surface (111) ;
a torsion spring (300) having a first end (310) engaged with the base; and **characterized in that**
the torsion spring having a second end (320) bearing upon the damping member so that upon loading of the torsion spring in the unwinding direction the damping member is compressed between the second end of the torsion spring and the pivot arm thereby causing a normal force to be imparted upon the base by said damping member.

6. The tensioner as in claim 1 or 5, wherein the second end (32; 320) of the torsion spring bears upon the damping member on a tangent.

7. The tensioner as in claim 6, when dependent on claim 1, wherein upon loading of the torsion spring in the unwinding direction the damping member radially expands causing a normal force to be imparted on the pivot arm inner surface.

8. The tensioner as in claim 6, when dependent on claim 5, wherein upon loading of the torsion spring in the unwinding direction the damping member radially expands causing a normal force to be imparted on the base inner surface.

9. The tensioner as in any one of claims 6 to 8, wherein the bearing of the second end (320) of the torsion spring upon the damping member results in an asymmetric damping coefficient as between a torsion spring loading direction and unloading direction.

10. The tensioner as in claim 1 or 6, wherein the torsion spring comprises a first portion having a first diameter (DI) and a second portion having a second diameter (D2), the first diameter being greater than the second diameter.

11. The tensioner as in claim 10, wherein the spring portion having a second diameter (D2) is disposed radially inward of the arcuate damping member body.

12. The tensioner as in claim 1, 5, 6 or 9, wherein a damping coefficient is asymmetric.

13. The tensioner as in claim 1, 5 or 9, wherein the torsion spring has a rectangular cross-section.

14. The tensioner as in claim 12, wherein the damping coefficient is 2:1.

15. The tensioner as in claim 1, 5, or 9, wherein the damping member comprises two or more frictional material members.

16. The tensioner as in claim 15, wherein the damping member comprises an arcuate body and the friction material members are disposed on a radially outer surface of the body.

## Patentansprüche

1. Spanner, der Folgendes umfasst:
eine Basis (10) mit einer Welle (11);
einen Schwenkarm (20), der mit der Welle in Eingriff gebracht ist;
eine Riemenscheibe (50), die zapfenartig mit dem Schwenkarm zusammengesetzt ist;
ein gekrümmtes Dämpfungselement (40), das reibungsschlüssig mit einer Schwenkarminnenfläche (21) in Eingriff gebracht ist;
eine Torsionsfeder (30), die ein erstes Ende (31) aufweist, das mit dem Schwenkarm in Eingriff gebracht ist;
und **dadurch gekennzeichnet, dass**
die Torsionsfeder ein zweites Ende (32) aufweist, das auf dem Dämpfungselement aufliegt, sodass, wenn die Torsionsfeder in der Abwicklungsrichtung gespannt wird, das Dämpfungselement zwischen dem zweiten Ende der Torsionsfeder und der Basis zusammengepresst wird, wodurch bewirkt wird, dass vom Dämpfungselement eine Normalkraft auf den Schwenkarm ausgeübt wird.

2. Spanner nach Anspruch 1, wobei die Basis einen Vorsprung umfasst, um eine Basisrotation auf einer Montagefläche zu verhindern.

3. Spanner nach Anspruch 1, wobei das Dämpfungselement einen gekrümmten Körper und ein auf einer radial äußeren Fläche des Körpers eingerichtetes Reibungsmaterial umfasst.

4. Spanner nach Anspruch 1, wobei die Welle ein Loch zum Aufnehmen einer Befestigungsvorrichtung umfasst.

5. Spanner, der Folgendes umfasst:
eine Basis (100) mit einer schwenkbar damit in Eingriff gebrachten Welle (110);
einen Schwenkarm (200), der mit der Welle verbunden ist;
eine Riemenscheibe (500), die zapfenartig mit dem Schwenkarm zusammengesetzt ist;
ein gekrümmtes Dämpfungselement (400), das reibungsschlüssig mit einer Basisinnenfläche (111) in Eingriff gebracht ist;
eine Torsionsfeder (300), die ein erstes Ende (310) aufweist, das mit der Basis in Eingriff gebracht ist;
und **dadurch gekennzeichnet, dass**
die Torsionsfeder ein zweites Ende (320) aufweist, das auf dem Dämpfungselement aufliegt, sodass, wenn die Torsionsfeder in der Abwicklungsrichtung gespannt wird, das Dämpfungselement zwischen dem zweiten Ende der Torsionsfeder und dem Schwenkarm zusammengepresst wird, wodurch bewirkt wird, dass vom Dämpfungselement eine Normalkraft auf die Basis ausgeübt wird.

6. Spanner nach Anspruch 1 oder 5, wobei das zweite Ende (32; 320) der Torsionsfeder auf dem Dämpfungselement tangential aufliegt.

7. Spanner nach Anspruch 6 bei Abhängigkeit von Anspruch 1, wobei sich das Dämpfungselement, wenn die Torsionsfeder in der Abwicklungsrichtung gespannt wird, radial ausdehnt, wodurch bewirkt wird, dass eine Normalkraft auf die Schwenkarminnenfläche ausgeübt wird.

8. Spanner nach Anspruch 6 bei Abhängigkeit von Anspruch 5, wobei sich das Dämpfungselement, wenn die Torsionsfeder in der Abwicklungsrichtung gespannt wird, radial ausdehnt, wodurch bewirkt wird, dass eine Normalkraft auf die Basisinnenfläche ausgeübt wird.

9. Spanner nach einem der Ansprüche 6 bis 8, wobei aus dem Aufliegen des zweiten Endes (320) der Torsionsfeder auf dem Dämpfungselement ein asymmetrischer Dämpfungskoeffizient wie zwischen einer Spannrichtung und einer Entspannrichtung der Torsionsfeder resultiert.

10. Spanner nach Anspruch 1 oder 6, wobei die Torsionsfeder einen ersten Abschnitt mit einem ersten Durchmesser (D1) und einen zweiten Abschnitt mit einem zweiten Durchmesser (D2) umfasst, wobei der erste Durchmesser größer ist als der zweite Durchmesser.

11. Spanner nach Anspruch 10, wobei der Federabschnitt mit einem zweiten Durchmesser (D2) radial einwärts vom gekrümmten Dämpfungselementkörper eingerichtet ist.

12. Spanner nach Anspruch 1, 5, 6 oder 9, wobei ein Dämpfungskoeffizient asymmetrisch ist.

13. Spanner nach Anspruch 1, 5 oder 9, wobei die Torsionsfeder einen rechteckigen Querschnitt aufweist.

14. Spanner nach Anspruch 12, wobei der Dämpfungskoeffizient 2:1 ist.

15. Spanner nach Anspruch 1, 5 oder 9, wobei das Dämpfungselement zwei oder mehr Reibungsmaterialelemente umfasst.

16. Spanner nach Anspruch 15, wobei das Dämpfungselement einen gekrümmten Körper umfasst und die Reibungsmaterialelemente auf einer radial äußeren Fläche des Körpers eingerichtet sind.

## Revendications

1. Tendeur, comprenant:
une base (10) présentant un arbre (11);
un bras pivotant (20) engagé avec l'arbre;
une poulie (50) tourillonnée sur le bras pivotant;
un élément d'amortissement courbe (40) engagé par frottement avec une surface intérieure (21) du bras pivotant; et
un ressort de torsion (30) présentant une première extrémité (31) engagée avec le bras pivotant,
**caractérisé en ce que** le ressort de torsion présente une second extrémité (32) qui s'appuie sur l'élément d'amortissement de telle sorte que lors du chargement du ressort de torsion dans le sens de déroulement, l'élément d'amortissement soit comprimé entre la seconde extrémité du ressort de torsion et la base, entraînant de ce fait qu'une force normale soit imprimée au bras pivotant par ledit élément d'amortissement.

2. Tendeur selon la revendication 1, dans lequel la base comprend un onglet pour empêcher une rotation de la base sur une surface de montage.

3. Tendeur selon la revendication 1, dans lequel l'élément d'amortissement comprend un corps courbe et un matériau de frottement disposé sur une surface radialement extérieure du corps.

4. Tendeur selon la revendication 1, dans lequel l'arbre comporte un trou destiné à recevoir un élément de fixation.

5. Tendeur, comprenant:
une base (100) présentant un arbre (110) engagé de façon pivotante sur celle-ci;
un bras pivotant (200) connecté à l'arbre;
une poulie (500) tourillonnée sur le bras pivotant;
un élément d'amortissement courbe (400) engagé par frottement avec une surface intérieure (111) de la base; et
un ressort de torsion (300) présentant une première extrémité (310) engagée avec la base,
**caractérisé en ce que** le ressort de torsion présente une second extrémité (320) qui s'appuie sur l'élément d'amortissement de telle sorte que lors du chargement du ressort de torsion dans le sens de déroulement, l'élément d'amortissement soit comprimé entre la seconde extrémité du ressort de torsion et le bras pivotant, entraînant de ce fait qu'une force normale soit imprimée à la base par ledit élément d'amortissement.

6. Tendeur selon la revendication 1 ou 5, dans lequel la seconde extrémité (32; 320) du ressort de torsion s'appuie sur l'élément d'amortissement sur une tangente.

7. Tendeur selon la revendication 6 lorsqu'elle dépend de la revendication 1, dans lequel, lors du chargement du ressort de torsion dans le sens de déroulement, l'élément d'amortissement s'expanse radialement, entraînant qu'une force normale soit imprimée à la surface intérieure du bras pivotant.

8. Tendeur selon la revendication 6 lorsqu'elle dépend de la revendication 5, dans lequel, lors du chargement du ressort de torsion dans le sens de déroulement, l'élément d'amortissement s'expanse radialement, entraînant qu'une force normale soit imprimée à la surface intérieure de la base.

9. Tendeur selon l'une quelconque des revendications 6 à 8, dans lequel l'appui de la seconde extrémité (320) du ressort de torsion sur l'élément d'amortissement résulte en un coefficient d'amortissement asymétrique entre une direction de chargement et une direction de déchargement du ressort de torsion.

10. Tendeur selon la revendication 1 ou 6, dans lequel le ressort de torsion comprend une première partie qui présente un premier diamètre (D1) et une seconde partie qui présente un second diamètre (D2), le premier diamètre étant plus grand que le second diamètre.

11. Tendeur selon la revendication 10, dans lequel la partie de ressort qui présente un second diamètre (D2) est disposée radialement vers l'intérieur du corps d'élément d'amortissement courbe.

12. Tendeur selon la revendication 1, 5, 6 ou 9, dans lequel un coefficient d'amortissement est asymétrique.

13. Tendeur selon la revendications 1, 5 ou 9, dans lequel le ressort de torsion présente une section transversale rectangulaire.

14. Tendeur selon la revendication 12, dans lequel le coefficient d'amortissement est 2:1.

15. Tendeur selon la revendication 1, 5 ou 9, dans lequel l'élément d'amortissement comprend deux ou plus de deux éléments de matériau de frottement.

16. Tendeur selon la revendication 15, dans lequel l'élément d'amortissement comprend un corps courbe, et les éléments de matériau de frottement sont disposés sur une surface radialement extérieure du corps.
